(19) **Europäisches Patentamt**

**European Patent Office**

**Office européen des brevets**

(11) **EP 0 865 626 B1**

(12) **EUROPEAN PATENT SPECIFICATION**

(45) Date of publication and mention
of the grant of the patent:
**21.07.1999 Bulletin 1999/29**

(21) Application number: **96941140.4**

(22) Date of filing: **05.12.1996**

(51) Int Cl.⁶: **G02B 27/22, H04N 13/00**

(86) International application number:
**PCT/GB96/03014**

(87) International publication number:
**WO 97/22033 (19.06.1997 Gazette 1997/26)**

(54) **AUTOSTEREOSCOPIC DISPLAY**

**AUTOSTEREOSKOPISCHE ANZEIGE**

**AFFICHAGE AUTOSTEREOSCOPIQUE**

(84) Designated Contracting States:
**DE FR GB**

(30) Priority: **09.12.1995 GB 9525222**
**29.12.1995 GB 9526672**

(43) Date of publication of application:
**23.09.1998 Bulletin 1998/39**

(73) Proprietor: **Street, Graham Stewart Brandon**
**Reading, Berkshire RG7 2NU (GB)**

(72) Inventor: **Street, Graham Stewart Brandon**
**Reading, Berkshire RG7 2NU (GB)**

(74) Representative: **Wilkinson, Stephen John et al**
**Stevens, Hewlett & Perkins**
**1 St. Augustine's Place**
**Bristol BS1 4UD (GB)**

(56) References cited:
**EP-A- 0 316 465**    **EP-A- 0 625 861**
**WO-A-94/06249**      **WO-A-94/20875**

## Description

This invention relates to the field of three-dimensional imaging and specifically to the provision of stereoscopic images which require no special eye wear to be worn by the observer. Such a display is usually described as autostereoscopic.

## BACKGROUND

In patent application PCT/GB94/00405 (Street), various embodiments of apparatus have been described through which two images may be observed, in the form of a stereoscopic image pair. A principal objective of that invention is to track the viewing position of the observer and to ensure that the light corresponding to each image correctly converges to the observer's respective eye locations. Certain embodiments employ one or two liquid crystal display (LCD) screens to achieve this objective. An embodiment, which uses a single LCD screen, relies on the vertical column structure of the LCD to match the pitch of a lenticular screen, placed immediately in front of the LCD surface. Two of the image columns behind each lenticular element provide a left and right eye view to the observer. A difficulty encountered with this approach is that most colour LCD's have a sub-pixel structure in which different colour elements are spaced horizontally. This can present a serious limitation to the use of standard LCD screens for autostereoscopic colour images.

A second embodiment overcomes this difficulty by employing two LCD's positioned at conjugate positions either side of a semitransparent mirror. Behind each LCD the combination of a striped mask or barrier strip screen and a matching lenticular, having the mask's pattern at the focal plane of the lenticular elements, provides a structured light source, the property of which is to pass light to defined regions at the position of the observer, whilst blocking light to adjacent regions. The system is configured to ensure that the light from one LCD is observed at locations spaced from those at which the light from the other LCD is observed. The lateral position and distance of these regions of concentration of light from the display apparatus is controlled to track the location of the observer so that each eye sees the correct image of the stereo pair, whereby a three-dimensional image is observed. The advantage of this arrangement is that the pattern of elements on the LCD need not be constrained by the geometry of the lenticular screen. Additionally, each LCD image retains its full complement of picture elements. There are occasions, however, when cost and/or space constraints make it attractive to employ a single LCD screen to provide both images for the stereo pair. The current invention achieves this whilst preserving the full observer tracking capability of the two LCD configuration described in PCT/GB94/00405. It does this by providing a specially adapted structured light source. This causes the light from alternate rows of elements within the array of picture elements comprising the LCD image to reach only one eye of the observer and the light from the other lines of picture elements only to reach the observer's other eye. In effect, two structured light sources similar to that described in PCT/GB94/00405 are spatially multiplexed to achieve the required result. Other embodiments of this invention provide a structured light source which can direct light from several groups of picture elements, arranged in lines or other configurations, to a corresponding plurality of different locations in space, making the simultaneous presentation of more than two perspectives of a scene possible.

It is an object of the current invention to provide a fully autostereoscopic image from a single LCD screen.

It is a further object of the invention to provide a compact illumination system together with a potentially large image area.

It is another object of the invention to provide for changes in the observer's viewing distance from the display, as well as for changes in lateral position.

It is also an object of the invention to provide a mode in which the LCD screen operates as a conventional two-dimensional display, without loss of the LCD's intrinsic resolution.

Thus, according to the present invention there is provided apparatus for the display of an autostereoscopic image as claimed in claim 1.

It is understood that the term vertical herein is used with reference to an observer whose eyes are horizontally spaced.

Advantageously, the light concentrating arrangement comprises a patterned mask comprising light blocking and transmitting regions and an array of convergent optical elements for focusing in a vertical plane the light from a point of the mask substantially at the plane of the SLM.

In certain preferred embodiments the mask is chequered having horizontal rows and substantially vertical columns, each row and column comprising alternate light blocking and transmitting regions. The columns are preferably tapered.

The light blocking and transmitting characteristics for any given region may be in respect of selected portions of the spectral range.

Preferably the light structuring means comprises a further array of convergent optical elements having a horizontal pitch, said further array providing for a row of the mask at least a part of the spectral range of one view and having substantially vertical elongate elements at a pitch corresponding to twice the column pitch of the mask.

Where the columns are tapered, the elements of the further array have a matching taper.

In another embodiment of the invention the mask comprises vertical columns and the light structuring means comprises imaging means for providing horizontally juxtaposed viewing zones corresponding to respective columns of the mask. Conveniently, the imaging means is a lens.

In a further embodiment of the invention the light concentrating arrangement comprises a holographic optical element.

Advantageously the light source comprises vertically spaced compact sources each of which illuminates the holographic optical element with different spectral components.

Preferably control means is provided for tracking the observer's location by controlling the direction in a horizontal plane of the light from the light structuring means in response to the observer's co-ordinate data.

Advantageously the observer's location is tracked by controlling the direction in a horizontal plane of the light from the light structuring means in response to said observer's co-ordinate data, by moving the patterned mask relative to the further array of convergent optical elements.

The observer's lateral position is tracked by relative motion between the patterned mask and the further array of convergent optical elements in a horizontal plane.

Tracking of the observer's distance from the light structuring means is effected by relative motion between the patterned mask and the further array of convergent optical elements along an axis which is substantially aligned with the elongate direction of the elements of the further array. The relative motion between the patterned mask and the further array of convergent optical elements to track the observer's lateral position is in a direction orthogonal to said axis.

Advantageously the patterned mask has a programmable pattern. Tracking of the observer's location is conveniently provided by controlling the direction in a horizontal plane of the light from the light structuring means by programming the pattern.

The mask may be programmed so that, in use, blocking regions become transmitting and transmitting regions to become blocking on a video frame sequential basis. In preferred embodiments the SLM is a liquid crystal display.

In certain embodiments means is provided, intermediate the observer and the light source, which is electrically switchable between an optically transparent and diffusing state.

In certain embodiments, when the switchable means is diffusing, the SLM provides a two-dimensional image to its full resolution.

In other embodiments, when the switchable means is diffusing, the image of an individual row of modulating elements of the SLM is broadened vertically, thus avoiding the appearance of gaps between the lines comprising each perspective view of the autostereoscopic image.

According to a further aspect of the invention there is provided a method for the display of an autostereoscopic image as claimed in claim 24.

The invention embraces apparatus for the display of autostereoscopic images comprising a two-dimensional transmissive display having a plurality of juxtaposed rows of light modulating components, each said modulating component providing, in use, a component of an autostereoscopic image; a source of light for viewing in transmission the image provided by said display; and means for structuring said light so that, in use, the light from a first plurality of spaced individual or rows of modulating components for providing at least a first spectral component of a first perspective of the image is seen substantially only by a first eye of the observer and, simultaneously, the light from a second plurality of spaced individual or rows of modulating components for providing said first spectral component of a second perspective of the image is seen substantially only by the second eye of the observer.

The light structuring means typically comprises a patterned mask; a first array of convergent optical elements, each of said first array's elements having its principal convergence in a first orthogonal plane, normal to the focal plane of the element and containing a row of light modulating components, and adjacent ones of said first convergent elements being spaced at a first distance which substantially matches the repetition length of the pattern of said mask in said first orthogonal plane, the mask or an image and/or shadow thereof being located substantially at the focal plane of said first convergent elements; and a second array of convergent optical elements, each of said second array's elements having its principal convergence in a second orthogonal plane, normal to both said first orthogonal plane and said focal plane of the first convergent elements, adjacent ones of said second convergent elements being spaced at a second distance, selected in conjunction with the repetition length of the pattern of said mask or said image and/or shadow thereof in said second orthogonal plane, and the second convergent elements having a focal length so that, in use, the pitch in said second plane of the image formed of the mask's pattern at the plane of the light modulating components substantially matches an integer multiple of the pitch between adjacent rows of said components.

Advantageously the pattern of the mask comprises a regular chequered array of light blocking and transmitting regions on a transparent substrate. A light blocking region for one spectral range may transmit another part of the visible spectrum.

The invention provides for relative movement between the first array of convergent optical elements and the mask or the image and/or shadow thereof provides the control required for tracking the location of the observer.

Advantageously each array of convergent optical elements comprises a lenticular screen.

The structure of said first array of convergent elements may be tapered, having a pitch between the centres of adjacent elements which varies along their length.

Further, in preferred embodiments of the invention, apparatus for the display of autostereoscopic images comprises a two-dimensional transmissive display having a plurality of juxtaposed rows of light modulating components at an image plane, each said modulating component providing, in use, a component of an autostereoscopic image; a plurality of sources of light for providing illumination by emission or transmission, said sources being spaced at a first pitch in a first direction, said direction being orthogonal to the direction of the rows of modulating components; and an array of juxtaposed convergent optical elements located in the optical paths from the sources to the modulating components, each of said array's elements having its principal convergence in a plane orthogonal to the rows of modulating components and spaced at a second pitch, so that, in use, the concentration of light from a first source formed at the image plane in one dimension by a first convergent element is substantially coincident with the concentration of light formed, by a second convergent element adjacent to said first element, at said image plane of a second source, spaced in said first direction from the first source, said first pitch and the focal length of the convergent elements being selected so that the spacing between the concentrations of light formed by one convergent element from light of respective sources adjacent in said first direction is an integer multiple of the pitch between adjacent rows of the light modulating components of the transmissive display, so that the light from a first plurality of spaced individual or rows of modulating components for providing at least a first spectral component of a first perspective of the image is seen substantially only by a first eye of the observer and, simultaneously, the light from a second plurality of spaced individual or rows of modulating components for providing said first spectral component of a second perspective of the image is seen substantially only by the second eye of the observer.

Advantageously, the first direction is disposed vertically and the spaced sources are re-imaged to the location of the observer in the horizontal plane by a convergent optical system placed in the optical path between said sources and the observer.

Conveniently, the sources are provided by a corresponding series of apertures in front of an extended light source. The apertures may be programmable and comprise a spatial light modulator such as an LCD.

In certain embodiments the function of the sources and the convergent optical system may be replaced by providing an emulation thereof by means of a light source and a holographic recording.

According to another aspect of the invention, apparatus for the display of autostereoscopic images comprises a two-dimensional transmissive display having a plurality of juxtaposed rows of light modulating components at an image plane, each said modulating component providing, in use, a component of an autostereoscopic image for an observer; a holographic recording; a source of light for providing illumination for said holographic recording; said recording comprising at least a first and a second array of optically convergent components, each said array providing, in use, a respective array of concentrations of light, the locations of the concentrations of the first array being spaced from the locations of the concentrations of the second array, the light from the first and second arrays being directed respectively towards the first eye and the second eye of the observer and being substantially absent respectively from the second eye and the first eye of the observer; and the locations of said concentrations of light being arranged to coincide with the locations of respective modulating components of the transmissive display, whereby an autostereoscopic image is observed.

Advantageously means for tracking the location of the observer comprises means for selecting the location of the light source to provide the required location of the viewing zones whilst maintaining registration between the pattern of concentrations of light provided by the holographic recording for each said viewing zone and the respective modulating components of the LCD.

According to another aspect of the invention optional means is provided to introduce diffusion of light in the optical path between the patterned mask and the light modulating components, so that in use the structure of the light may be diffused and the two-dimensional transmissive display may provide a two-dimensional image at its full resolution.

DESCRIPTION OF PREFERRED EMBODIMENTS

The invention will now be described with reference to Figures 1 to 8 in which:-

Figure 1 shows in section the principle of a structured light source in accordance with the prior art.

Figure 2 shows diagrammatically the form of a patterned mask in accordance with the invention.

Figure 3 shows two sections taken at orthogonal planes through a structured light source in accordance with the invention.

Figure 4 illustrates diagrammatically a display system constructed in accordance with the invention.

Figure 5 shows another embodiment of the invention.

Figures 6 and 7 illustrate a technique for the recording of a holographic optical element for use in accordance with the invention.

Figure 8 illustrates apparatus which includes a holographic optical element in accordance with the invention.

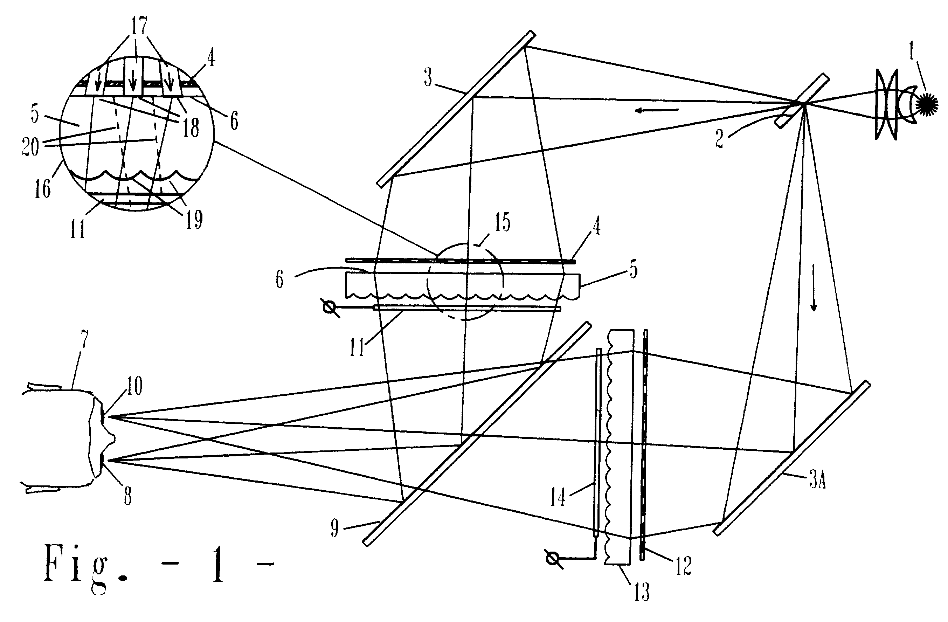

In Figure 1, two structured light sources, constructed in accordance with the teachings of PCT/GB94/00405, are shown as part of an autostereoscopic display utilising two image generating screens of the LCD type. Light from a source 1 is split by a semitransparent mirror 2 into two components. Mirror 3 directs approximately 50% of the light to the rear of a barrier strip array or screen 4. This has a series of long vertically extending transmitting apertures spaced so as to substantially match the pitch of a lenticular screen 5.

Screen 5 has a diffusing rear surface 6 on which the barrier screen's shadow produces a pattern of light. This pattern is scaled by adjusting the separation between the two screens until the observer 7 receives light from the entire area of screen 5 with the right eye 8 via a semitransparent mirror 9, whilst the left eye 10 receives substantially no light from screen 5. A second optical channel consists of a mirror 3A, barrier strip array 12, a corresponding lenticular screen 13 and a second LCD panel 14. This arrangement ensures that the left eye sees substantially only light from LCD 14. A small region 15 of the structured light source in the first optical channel is shown enlarged as inset 16 in Figure 1. Diverging light 17 passes through the barrier strip screen or mask 4 to impinge on the diffusing rear surface 6 of the lenticular 5. Light regions 18 formed on surface 6 are re-imaged by cylindrical lenses 19, causing light to pass through the LCD 11 in directions converging towards the observer's right eye (following reflection by an intermediate mirror). The light paths which would correspond to the observer's left eye are blocked by the opaque regions of the mask 4, and are shown as broken lines 20.

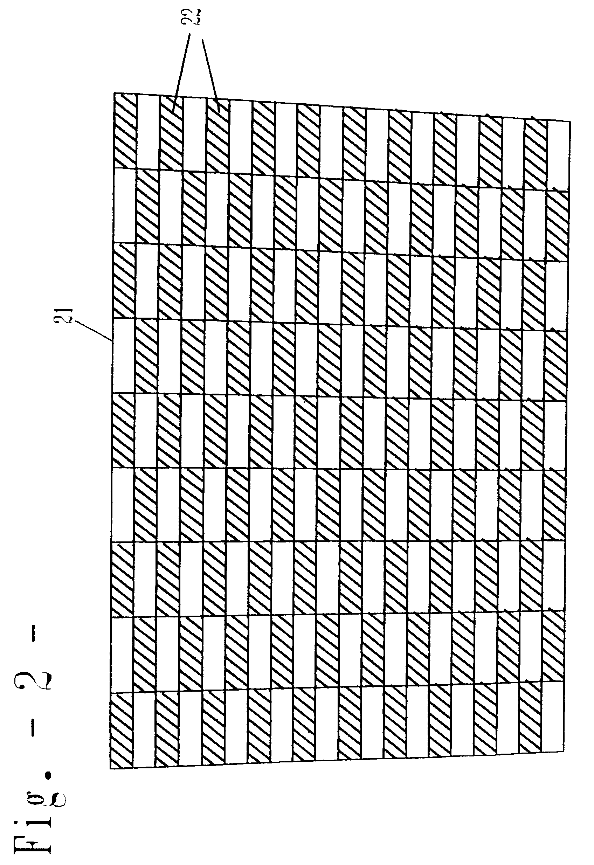

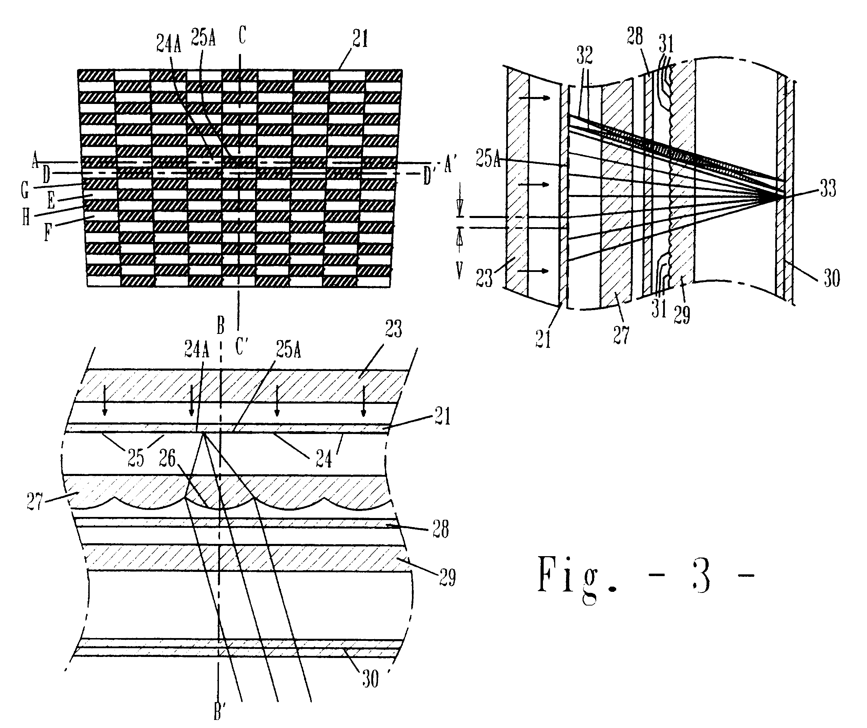

A new kind of barrier screen in the form of a patterned mask is illustrated in Figure 2. The mask 21 is arranged in rows of substantially rectangular light blocking regions 22. Adjacent rows are arranged in anti phase, thereby creating a chequered pattern. In order to change the convergence of light passing through each row of mask 21 to the location of the observer, without the need to use a shadow mask technique as illustrated in Figure 1, a tapered horizontal pitch is provided. This matches the taper of a lenticular structure (not shown) having substantially vertically running lenticular elements, as already described in PCT/GB94/00405. Vertical motion of this lenticular screen relative to the mask changes the local pitch of one relative to the other, thereby achieving the necessary convergence control. The mask of Figure 2 can not perform a useful function with a matching lenticular screen however, unless it is complemented by another lenticular array having its elements running horizontally, the vertical pitch between the centres of such elements corresponding to that between adjacent rows of light blocking regions 22. The combined function of these optical elements together with a suitable LCD screen is illustrated in Figure 3. For the sake of clarity, neither Figure 2 nor Figure 3 are drawn to scale. In practice several hundred convergent optical elements are juxtaposed horizontally for the tapered array and vertically for the other array. The illustrations provided may be regarded as a much enlarged version of a small portion of the display device.

In Figure 3, the chequered mask element of a structured light source in accordance with the current invention is shown for reference purposes without the other necessary components in order to relate conveniently to two orthogonal sections taken through all the elements of such a structure. All items are drawn much enlarged for the sake of clarity and not to scale. Consequently, the elements illustrated represent only a small part of a real device, where feature size is typically a few tenths of a millimetre and the full dimensions of a display can typically be in excess of 350 mms across its diagonal. Turning first to the horizontal section defined by the line AA' through mask 21 and shown at the bottom of the drawing, there are six components in the assembly. Light is provided by an extended source or backlight 23 of the conventional type. It is uniformly bright, emitting light from its entire area over a relatively large angle. Mask 21, positioned in front of source 23, has alternating light transmitting regions 24 and blocking regions 25 lying along line AA'. A pair of such regions 24A and 25A is located near to the focal plane of a cylindrical element 26 of a tapered lenticular screen 27. The taper of screen 27, which is not illustrated, is arranged to match that of mask 21. The principle of a tapered lenticular screen has already been disclosed in PCT/GB94/00405. It will be clear to those versed in the art that light from region 24A , after passage through element 26, will have a range of directions falling on one side of a vertical plane passing through the boundary between regions 24A and 25A and through the axis of lens 26. The line BB', denoting this plane, is shown as being normal to the plane of the lenticular screen 27, but, in practice, control of the direction of light is achieved by lateral motion of the mask with respect to the lenticular 27. This principle is illustrated in PCT/GB94/00405 for use in tracking an observer's head location. Just as light is passed by region 24A, it is blocked by region 25A, and a dark region is observed on the other side of line BB'. There are three other components in the assembly. The first of these is an electrically operable diffuser 28. Its function is to render the light source unstructured when this is desirable. For three-dimensional viewing, this element is arranged to be transparent and may be ignored for the purpose of the current description.

Before moving to a vertical section of the assembly taken through a plane orthogonal to mask 21, it is appropriate to note that the transmission and blocking of light as a function of angle by the combination of transmitting regions 24, blocking regions 25 and lenticular screen 27 along line AA', is reversed when screen 27 operates in conjunction with the alternating transmitting and blocking regions of the rows vertically adjacent to the row containing regions 24 and 25 on mask 21. The elements of the mask along line DD' are the reverse of their neighbours above and below. We examine this feature of the structure in the vertical section shown at the right side of Figure 3 and taken through a plane denoted by line CC'.

Mask 21 has light transmitting and blocking regions which alternate vertically. The blocking region 25A appears in both sections. The vertical pitch V between rows is chosen in conjunction with the pitch between the axes of the cylindrical elements of another lenticular structure 29. In this embodiment, this pitch is made substantially equal to the vertical pitch between the rows of an LCD screen 30, although an integer multiple of this pitch would perform the same function. A small degree of scaling of both the pitch of screen 29 relative to that of LCD 30 and the vertical pitch of mask 21 relative to that of screen 29, can be useful in practice. The purpose of this arrangement of components is to achieve a very useful imaging function. For the sake of simplicity, the case where all vertical pitches are equal is dealt with here. The optically equivalent distance in air from mask 21 to the lens elements 31 of screen 29 is arranged to be the same as that of the lens elements 31 to the operative elements of LCD 30. These are typically located in-between two glass plates and associated polarisers. The focal length of cylindrical lens elements 31 is chosen to ensure that rays 32 leaving points on mask 21 are re-imaged to the plane of LCD 30. To a good approximation, particularly as the ratio of the width to focal length of these lens elements is undemanding, each element produces a 1:1 image of the mask's vertical structure. It will be noted that this imaging function only applies in the vertical plane, with the imaging action of vertically adjacent elements acting in coherent fashion. In the horizontal plane, it is the action of lenticular screen 27 which provides the angular characteristics of the light passing through LCD 30. Returning to the earlier observation that adjacent rows of mask 21 provide alternate left and right transmission or blocking characteristics, it will be apparent that this arrangement of components in accordance with the current invention provides a light source with a structure particularly well suited to autostereoscopic three-dimensional viewing. Providing the observer is located with an eye either side of line BB', shown in the horizontal section, and the convergence of the system has been set correctly for the distance between the LCD and observer, in accordance with the teachings of PCT/GB94/00405, light passing through the LCD row containing element 33 will receive light which has originated from alternate rows of mask 21 (D, E, F etc.), thus providing light for the observer's left eye. The same will follow for alternate rows of the LCD. The other half of the LCD's elements will be illuminated with light passing to the observer's right eye, corresponding to the intermediate rows (A, G, H etc.) of mask 21. For a three-dimensional image to be observed, right and left eye image data must be supplied in an interleaved manner to alternate rows of the LCD.

Where the LCD screen comprises a horizontally spaced sub-pixel structure, and different sub-pixels provide different colour components of the image, a modification of the current embodiment can provide a further enhancement to the image. The embodiment as described above provides an image for each eye which consists substantially of one half of the lines of the intrinsic LCD. Some loss of image quality may be observed with horizontal line structure being evident. A technique, previously disclosed in US Pat.No. 4,641,178 (Street), can be applied in a novel manner to the current invention. The mask 21 may be replaced by a transmissive screen having the same pattern of areas. Instead of half the areas being opaque and the other half being transparent, as illustrated in the embodiment of Figure 3, the transparent regions are replaced with ones which transmit green whilst blocking red and blue light. The opaque regions are arranged to transmit red and blue whilst blocking green light. Another combination, in which green and blue are paired and red is separated may be more convenient. By spatially multiplexing the spectral components of a full colour image in this way, and ensuring that the correct video data is fed to each colour of each row of the LCD, any horizontal line structure may be substantially mitigated, without any substantial loss of vertical resolution. Any horizontal line structure may also be mitigated by introducing some vertical diffusion in front of the LCD. Holographic diffusing elements or other anisotropic micro-optical structures may be conveniently used to accomplish this.

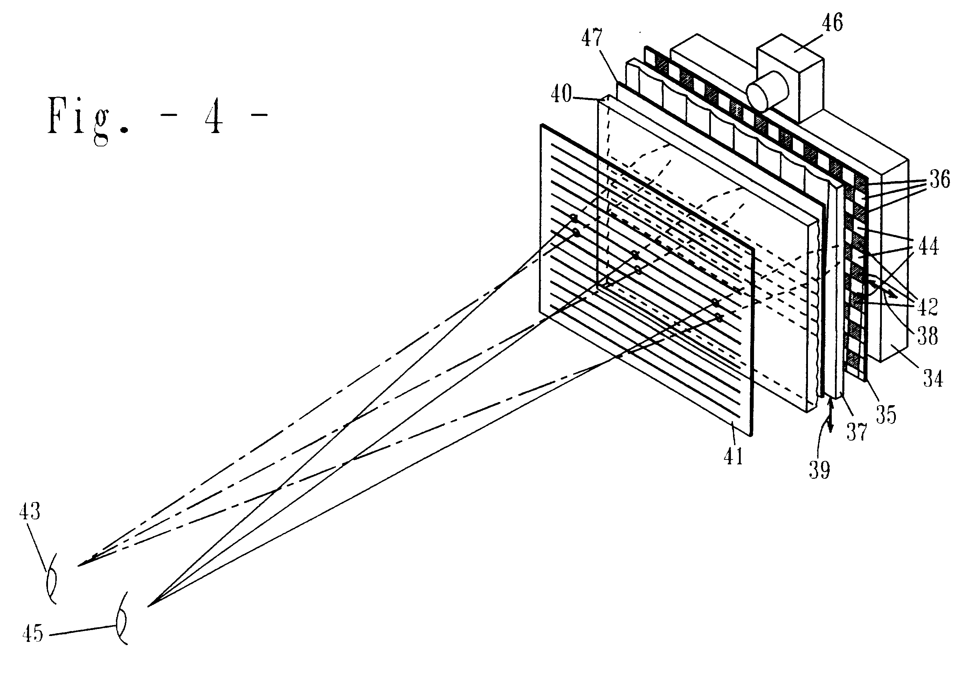

A display system constructed in accordance with the current invention is shown diagrammatically in Figure 4. An extended diffuse light source 34 provides light through a chequered mask 35. Mask 35 has a vertically tapered pattern of substantially rectangular (strictly trapezoidal) areas or regions 36 arranged in horizontally straight rows. Half of the areas are opaque (shown hatched) and the remainder are transparent. In conjunction with a lenticular screen 37, having its cylindrical elements arranged substantially vertically and a taper corresponding to that of mask 35, the necessary horizontal control of the light's structure is provided by mask 35. Lateral motion 38 of mask 35 relative to screen 37 provides left to right control, whilst vertical motion 39 of screen 37 relative to mask 35 changes the relative pitch at every point of the combined structure, thereby controlling convergence. Each element of a lenticular screen 40, which has its elements arranged horizontally, images light originating from any particular row of mask 35 to a corresponding row of elements of an LCD 41. The element's neighbour images light from this particular row to a row of LCD 41 which is spaced by two row pitches from the corresponding row. In other words, rows 42 of mask 35, which present the same arrangement of blocking and transmitting regions to lenticular screen 37, all provide light to alternate rows of the LCD and in such a manner that these are seen by the observer's left eye 43. Conversely, rows 44 of the mask, in combination with lenticular 37 and lenticular 40, provide light for the other interleaved lines of the LCD, and direct this to the observer's right eye 45. A head tracking system 46 senses the co-ordinates of the observer and controls the position of mask 35 and screen 37 to ensure that the viewing zones for the left and right eye images are correctly positioned for the observer. The embodiment of Figure 4 has the useful attribute, that it can be adapted for screens of any size without an increase in the structure's overall depth. Also illustrated in the embodiment is an optional transmissive sheet 47 which comprises scattering centres. These may be switched electrically from an operative state to one where the sheet is rendered transparent. A typical example of such a screen is one in which small regions of liquid crystal material are suspended in a plastic matrix. When transparent, the structured light source operates normally to provide a three-dimensional image. When the sheet scatters light, it acts as a diffuser and the display may be used conventionally as a two-dimensional display. In a system where both two-dimensional imaging to full resolution and autostereoscopic imaging to half the full vertical resolution are required, similar structures with only vertical diffusion properties and electrically switchable are conveniently placed immediately in front of the LCD (not shown) and are operable in a manner similar to that of sheet 47.

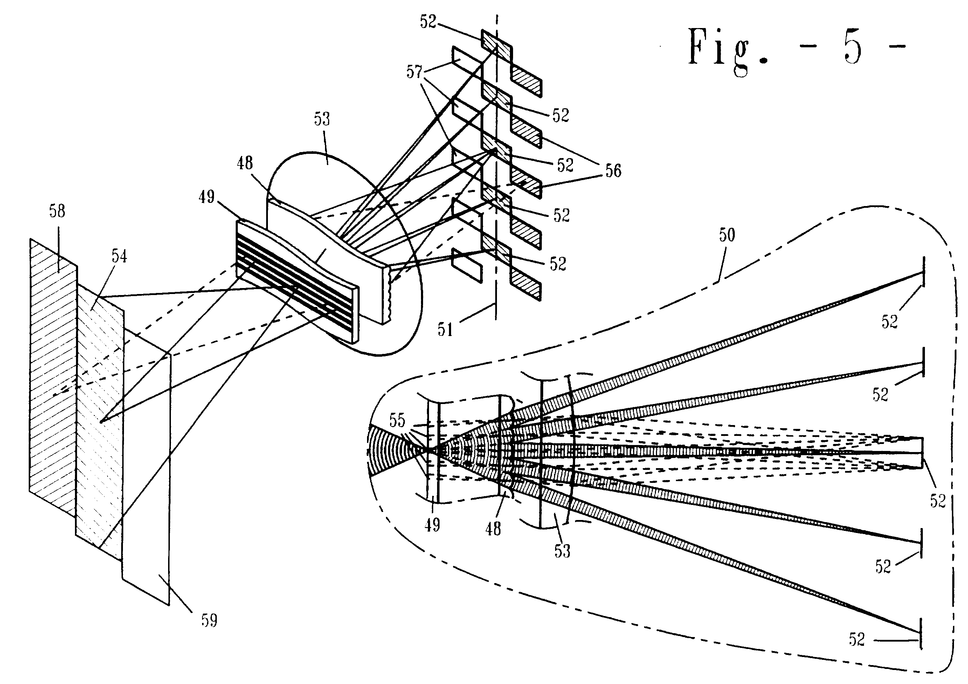

In Figure 5, a different form of the current invention is illustrated. The structured light source is essentially of the same form as that of Figure 4, that is to say, an array of vertically spaced convergent elements in the form of lenticular screen 48 is positioned behind an LCD 49 having a number of rows of light modulating components. The spacing of the LCD's rows and that of the convergent elements is closely related. However, whereas the imaging characteristic of the elements of screen 40 of Figure 4 and the portion of screen 29 of Figure 3 are essentially to provide a near 1:1 magnification in a vertical plane of mask rows on to the LCD's rows, the cylindrical elements of screen 48 are arranged to vertically image a more distant arrangement of apertures on to the LCD's image forming elements. Figure 5 shows the arrangement in part as an isometric view and, for clarity, a magnified section 50 along the optical path through vertical line 51 is provided.

Turning to section 50, apertures 52 placed in front of a conventional diffuse light source (not shown), provide light by transmission to a field lens 53. The prime function of lens 53 is to re-image apertures 52 to the lateral location of one eye of an observer. This is shown as the hatched area 54 in the main figure. In fact, in this embodiment, apertures 52 are spaced vertically so that the gap between them is twice the height of an aperture. The light from this vertical array of apertures is spread vertically by the action of the cylindrical lens elements of screen 48, so that the vertical dimension of region 54 is uniformly filled with image light. This is illustrated in the sectional view by the hatched regions between representative light rays from the centre of each aperture. This also illustrates a very important feature of the structure, which is that each aperture is imaged vertically by the action of an element of the lenticular screen so that its light is concentrated into a set of narrow bands 55. The gap between these horizontally extending bands of light from apertures 52 is, to a good approximation, twice the height of each band. This is the same mark to space ratio as for the apertures, in the vertical dimension. LCD screen 49 has a pitch between rows, which is one third of the pitch between bands 55. By vertical alignment of apertures 52, every third row of the LCD's light modulating elements is illuminated by light from apertures 52, and arrives at region 54. Two other columns of apertures 56 and 57 are provided to either side of the column of apertures 52 thereby forming a patterned mask. Columns 56 and 57 are respectively moved down and up by the height of one aperture. Light from these columns of apertures is imaged by field lens 53 and lenticular 48 in the same way as that from 52, except that the positions of the corresponding narrow bands of light on the LCD are shifted vertically from that of bands 55 and the region at the observer's location receiving light from these bands is shifted horizontally. For apertures 56, the bands move up by one LCD row spacing and the region 58 is found to the left of region 54. For apertures 57, the bands move down by one LCD row spacing and the region 59 is found to the right of region 54. This arrangement allows the presentation of three different perspective views, simultaneously. A reduction to two views is self evident, as is an increase to more than three. The constraint on the system is that the pitch between bands of light concentrated by the lenticular screen should be arranged to match an integer multiple of the row spacing of the LCD. The apertures may comprise a programmable mask, in the form of regions of a spatial light modulator, such as an LCD. In this way the pattern of the mask can be changed dynamically, for example to track the observer. A light source behind a lenticular can behave as an aperture.

It may be shown that many arrangements, which are hybrids of the embodiments of Figure 3 and Figure 5, may be constructed, provided certain relationships are maintained between the pitches between vertically adjacent elements of each of the apertures or sub-sources ($P_S$), the array of convergent elements ($P_L$) and selected (typically alternate) rows of modulating elements of the LCD ($P_T$). This relationship takes the form

$$P_S = (P_T \times P_L) / (N \times P_T - P_L),$$

where N is an integer.

The focal length of the convergent elements follows from the spacing between these three components of the system and ensures that the array of apertures is correctly imaged to the plane of the LCD.

Many configurations conforming to the basic principles of this invention are possible. In the embodiment of Figure 5 as described, light from adjacent apertures 52 is concentrated through neighbouring lenticular elements to the same light band. Another arrangement uses larger lenticular elements to cover four LCD rows. Used as described, four staggered columns of apertures would provide four viewing zones. If the vertical pitch of such apertures is halved, then these are imaged in pairs by the lenticular, and a two view system would result, by reprogramming. By using multiple apertures at the same vertical height, the same image may be viewed in different locations, allowing for multiple viewers. By swapping horizontal positions of left and right eye apertures on a frame by frame basis, whilst changing the content of the video displayed on the corresponding lines of the LCD, any horizontal line structure in the image may be substantially eliminated. All or some of the apertures, a field lens and other convergent optical elements, may be emulated or provided by a holographic recording located behind the LCD. By moving the location of the light source which plays back this hologram, a degree of head tracking can be achieved. By separating the light source into two or more compact sources spaced vertically, each providing different spectral components, one colour for one perspective view may be displayed together with its complement for another perspective view on the same row of the LCD.

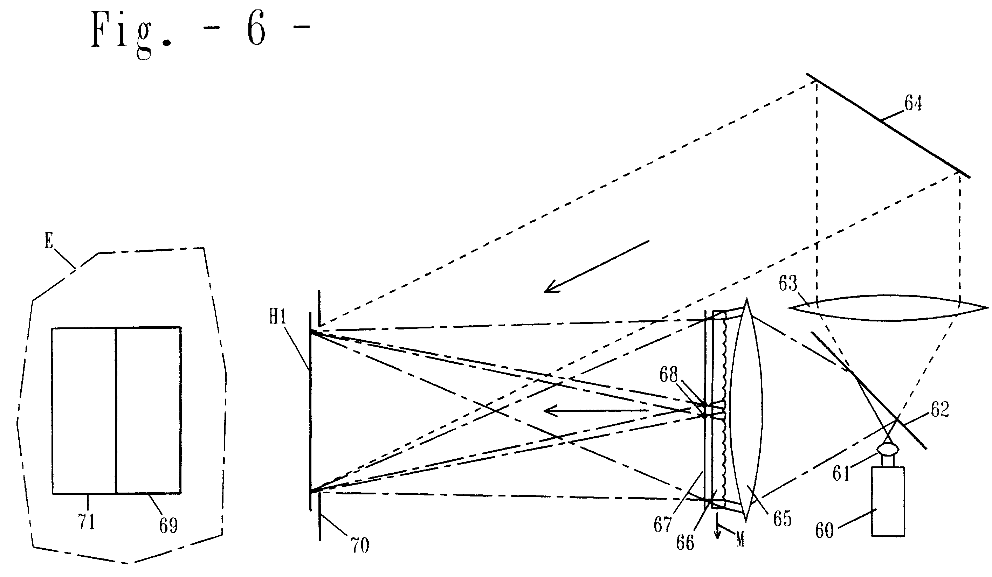

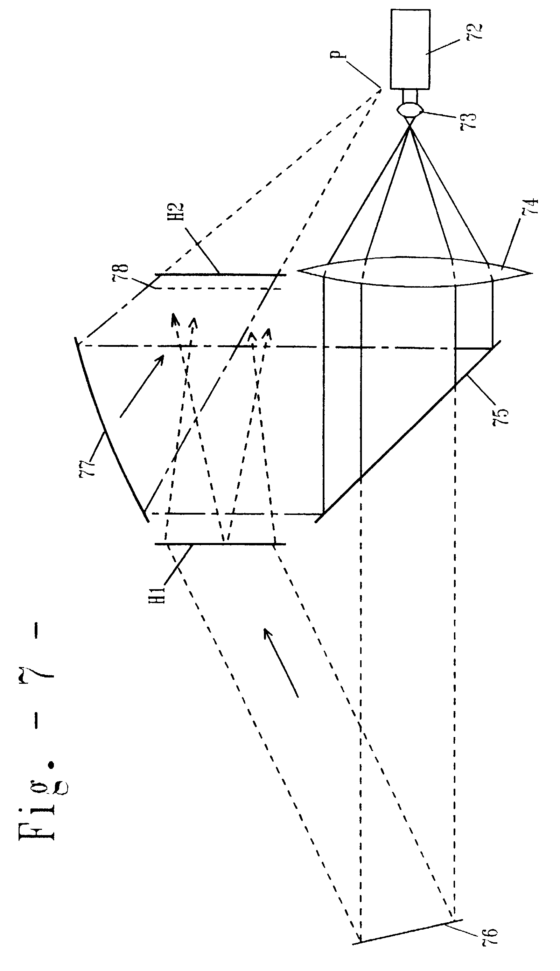

Apparatus and a method for making, in two steps, a holographic optical element (HOE), suitable for use with this invention, is described with the aid of Figures 6 and 7. In Figure 6, a coherent light source 60, such as an Argon laser operating at a wavelength of 514.7 nMs, provides light, via a short focus lens 61 and a beam splitter 62 to the two paths of an optical arrangement for recording a primary hologram H1. Lens 63 collimates the light for a reference beam, directed at H1 via a mirror 64. Lens 65 converges light in the main (illuminating) path of the apparatus, so that at all points of a rectangular area, equivalent in size to the display screen for which the resulting HOE is intended, light is travelling towards a point at H1, nominally positioned at the optimum observer distance from the HOE. In the current embodiment, an array of cylindrical convergent elements 66 is placed in the optical path between lens 65 and Hi. A diffusing screen 67 is positioned close to the focal plane of array 66. A series of lines of light (shown as points 68 in the sectional view of Figure 6) is formed on diffuser 67 by array 66 and the width of these lines may be adjusted by fine tuning the spacing of diffuser 67 with respect to array 66. The vertical pitch between the cylindrical elements of screen 66 is arranged to ensure that the spacing of the lines corresponding to points 68 is an integral multiple of the vertical pitch of the LCD screen to be used in an autostereoscopic display in accordance with the current invention. A rectangular aperture 69 shown in the auxiliary front elevation E and as a vertical gap in the main sectional view through an aperture plate 70, ensures that light from diffuser 67 and the reference beam from mirror 64 combines to form a holographic recording within the boundaries of aperture 69 on H1. The dimensions of this rectangular area correspond to the format of the viewing zone for one eye of an observer, and, when the final HOE , or H2, is made in a second stage process (see below with reference to Figure 7), this is where the light from a subset of the horizontal lines of the LCD is observed, providing the light source used to play back the holographic recording is positioned at the convergence point of the reference beam for the recording of H2. The recording of H1, however, is completed, after moving the array 66 in a direction normal to the direction of the cylindrical elements, as indicated by arrow M, so that the light lines formed by it are shifted to an intermediate position, corresponding in use to the other or another subset of rows of the LCD. These are recorded at a second rectangular aperture position 71 on H1. The two recordings correspond to different viewing zones for the two eyes of the observer. If the spacing between points 68 is more than two times the LCD row spacing, further viewing zones may be recorded in this way.

The final HOE is made as a second generation hologram H2 from the master H1. This is illustrated with the aid of Figure 7. Laser 72 and lenses 73 and 74 provide a collimated beam of coherent light. This is split by beam splitter 75 into a reading beam directed at H1 via mirror 76 and a reference beam for making the new recording H2. The reference beam is converged by an off-axis parabolic reflector 77 towards a location P on the opposite side of H2. When H2 has been processed, it comprises a HOE with the property that, if illuminated from the point P, light from a series of lines, corresponding to those produced by array 66 of Figure 6 and spaced at an integral multiple of the LCD row spacing, is observed within one viewing zone, and light from an interdigitated set of lines is observed at another viewing zone. By ensuring that H2 is located at a modest distance (say 10 mms) behind the plane 78 of the light lines formed when H1 is illuminated by the reading beam, the final recording may be positioned at this distance behind the LCD, in use. The light lines formed when the HOE is illuminated from a point corresponding to P in Figure 7, can then be made to coincide with the rows of the LCD. With suitable image data presented on the rows passing light directed towards each respective eye of the observer, an autostereoscopic image is observed.

The HOE formed using a series of cylindrical convergent elements as illustrated in Figure 6, provides a structured light source which illuminates complete lines of the LCD for each eye. Alternative arrangements may be used to segment the LCD in a different manner. In one such alternative, a mask is located at the plane where previously the light lines were to be formed. The diffuser is positioned between lens 65 and this mask, so that every aperture of the mask illuminates the entire area of H1. The pattern of apertures is arranged to match a subset of the modulating elements of the LCD. For each viewing zone, constructed at H1 in the manner already described, the mask is moved to select a new subset (minimum number 2) of the locations of LCD elements. Now, when H2 has been recorded, the arrangement of elements representing any one perspective view of the autostereoscopic image, can comprise elements arranged in a variety of different ways. A chequered pattern would be typical for a two view configuration. In fact, the HOE comprises at least two co-located arrays, one for each viewing zone, of convergent optical elements by virtue of the recording process, as each aperture of the original mask will have been recorded in this form, once for each viewing zone. Light originating at P is converged towards an array of points by H2 prior to arriving at one of the respective viewing zones. For a colour LCD in which each pixel (picture element) typically comprises three horizontally spaced sub-pixels, each of a different primary colour, alternate sub-pixels may be assigned to each view, thus preserving a relatively high horizontal resolution, providing the image data is correctly processed. Given the underlying chequered pattern of elements comprised in one perspective view, an additional important attribute is provided. The structure of many LCD's is one in which the elements of one colour are arranged in a vertical stripe pattern. A preferred pattern for analogue images, as opposed to digitally generated ones, is to arrange sub-pixels in a delta or triad configuration. The regime imposed by the segmentation of left and right eye images by the chequer board selection of sub-pixels from the vertical stripe configuration, is to provide a pattern similar to the delta configuration for each eye.

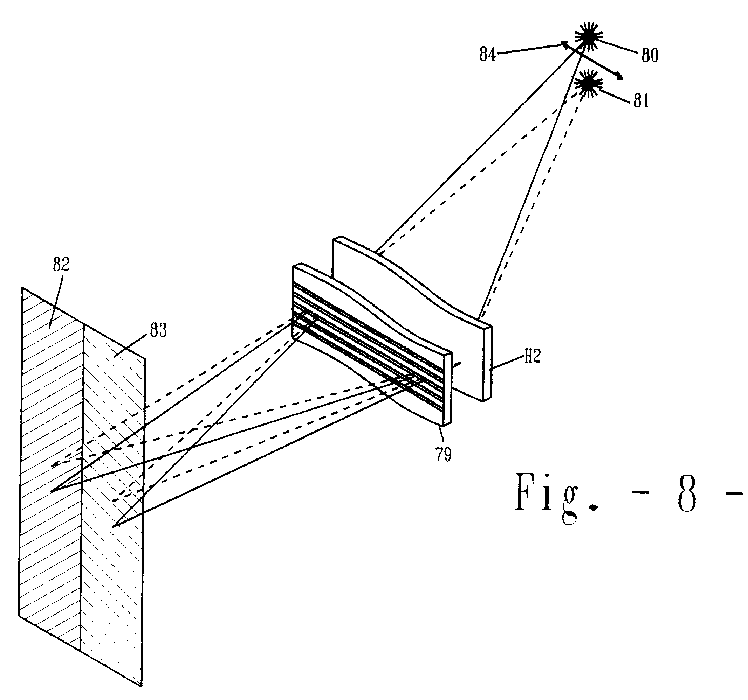

A simple embodiment of the invention in which the HOE provides alternate lines for each of two viewing zones but the illumination of the HOE is arranged so that for different spectral components the same view is displayed on adjacent lines thereby achieving a more evenly distributed set of sub-pixels is illustrated with reference to Figure 8. The HOE H2 is positioned behind an LCD 79. A small portion of each is shown. Two light sources, one providing magenta light 80 and the other providing green light 81 are spaced vertically and positioned behind the HOE H2. The vertical spacing of the sources 80 and 81 is such that the vertically spaced concentrations of magenta light formed for one viewing zone 82 are displaced by one row vertically from the spaced concentrations of green light formed for the same viewing zone. Conversely the magenta light reaching the other viewing zone 83 emanates from the LCD rows which provide green light to zone 82 and green light reaches zone 83 from the rows providing magenta light to zone 82. The result is a configuration of sub-pixels (red green and blue) for each eye which is well balanced in luminance for all lines of the LCD.

Head tracking is achieved, by selecting the correct location for the light source. Where, as in the above example, horizontal light lines are employed to illuminate an entire row of the LCD, the location of the source may be selected from a continuum in a horizontal direction, as illustrated by arrows 84. Where the illumination provided by the HOE is in the form of points or small areas or concentrations of light spaced both horizontally and vertically, selection from a discrete plurality of locations of the light source will cause it to illuminate the same set of modulating elements of the LCD, whilst providing a slightly different location for the viewing zones corresponding to each eye. For example, if the horizontal spacing between modulating components of the LCD, corresponding to the same view of an autostereoscopic image, is 0.176 mm and the distance of the HOE from the LCD is 10 mms, then a change of direction in the horizontal plane of the light from the HOE arriving at the LCD of one degree will produce an array of concentrations of light coincident with the same modulating components. If the viewing zones are spaced from the display by 700 mms, a typical viewing distance, then each of these will be shifted horizontally by 12.3 mms. If the concentrations of light are arranged in chequer board fashion, then a small alternating vertical change in the light's direction, from the HOE to the LCD, allows the horizontal tracking increment to be halved to one half of a degree, which is fine enough for practical purposes. In order to accommodate a wide range of viewing distances from the display, the light source may be moved in a direction towards or away from the HOE. Alternatively, the display's area may be segmented and the direction of the light from each segment modified according to the segment's location and the observer's distance. This segmentation may be achieved when recording H2, by providing for a series of light sources each having a nominal location behind H2, or by structuring the light source at its location to be directionally selective. A good example of such a structured light source is a programmable spatial light modulator, such as an LCD, positioned at the focal plane of a lenticular screen, with this combination located in front of a conventional, extended light source . If each lens of the screen has four elements of the LCD behind it, then the display area can be segmented into four vertical bands or segments, each effectively having its own programmable light source.

A further crossed array of cylindrical convergent elements added to the embodiment of Figure 5 and with its pitch and that between illuminating apertures horizontally correct, provides illumination in the form of points or small areas spaced both horizontally and vertically. This allow segmentation of the LCD in a chequer board fashion and selection from a discrete plurality of locations of the light sources or apertures to illuminate those elements of the LCD assigned to each eye, whilst providing different locations for the viewing zones corresponding to that eye. Likewise, a HOE comprising only one recorded viewing zone may be used with a plurality of light sources to select LCD elements for and direct light to different eyes of the observer.

**Claims**

1.   Apparatus for the display of an autostereoscopic image having at least two perspective views of a scene comprising a source of light (23, 34), a spatial light modulator (SLM) (30, 41, 49, 67, 79) having a plurality of light modulating elements intermediate an observer and the source of light, and means for structuring the light so that a first perspective view of the scene is seen by one eye (43) of the observer and a second perspective view of the scene is seen by the other eye (45) of the observer, characterised in that said light structuring means includes a light concentrating arrangement, disposed between the source of light and the SLM and having convergent optical elements (29, 40, 48), which forms, in an interleaved manner for the views of the image, a set of vertically spaced concentrations of light (55) for each view which is substantially mapped onto a respective set of elements of the SLM.

2. Apparatus as claimed in Claim 1 wherein the light concentrating arrangement further comprises a patterned mask (35) with light blocking (22, 25, 42) and transmitting (24, 44, 52, 56, 57) regions and an array of the convergent optical elements for focusing in a vertical plane the light from a point of the mask substantially at the plane of the SLM.

3. Apparatus as claimed in Claim 2 wherein the mask (21, 35) is chequered having horizontal rows and substantially vertical columns, each row and column comprising alternate light blocking and transmitting regions.

4. Apparatus as claimed in Claim 3 in which the columns are tapered.

5. Apparatus as claimed in any one of Claims 2 to 4 in which the light blocking and transmitting is in respect of selected portions of the spectral range.

6. Apparatus as claimed in any one of Claims 3 to 5 wherein said light structuring means comprises a further array of convergent optical elements (27, 37), said further array providing for a row of the mask at least a part of the spectral range of one view and having substantially vertical elongate elements at a pitch corresponding to twice the column pitch of the mask.

7. Apparatus as claimed in Claim 6 in which the columns are tapered and the elements of the further array have a matching taper.

8. Apparatus as claimed in Claim 2 wherein the mask comprises vertical columns and the light structuring means comprises imaging means for providing horizontally juxtaposed viewing zones corresponding to respective columns of the mask.

9. Apparatus as claimed in Claim 8 wherein the imaging means is a lens (53).

10. Apparatus as claimed in Claim 1 in which the light concentrating arrangement comprises a holographic optical element (H2).

11. Apparatus as claimed in Claim 10 in which the light source comprises vertically spaced compact sources (80, 81), each said compact source illuminating the holographic optical element with different spectral components.

12. Apparatus as claimed in any previous claim in which control means is provided for tracking the observer's location by controlling the direction in a horizontal plane of the light from the light structuring means in response to observer co-ordinate data.

13. Apparatus as claimed in Claim 6 or Claim 7 in which tracking of the observer's location is provided by controlling the direction in a horizontal plane of the light from the light structuring means in response to said observer's co-ordinate data, said control being effected by moving the patterned mask relative to the further array of convergent optical elements.

14. Apparatus as claimed in Claim 13 in which tracking of the observer's lateral position comprises relative motion in a horizontal plane (38) between the patterned mask and the further array of convergent optical elements.

15. Apparatus as claimed in Claim 13 in which tracking of the observer's distance from the light structuring means is effected by relative motion between the patterned mask and the further array of convergent optical elements along an axis, said axis being substantially aligned with the elongate direction of the elements of said further array (39), and tracking of the observer's lateral position is effected by relative motion between the patterned mask and the further array of convergent optical elements which is orthogonal to said axis.

16. Apparatus as claimed in Claim 2 wherein the pattern of the mask is programmable.

17. Apparatus as claimed in Claim 16 in which tracking of the observer's location is provided by controlling the direction in a horizontal plane of the light from the light structuring means in response to said observer's co-ordinate data, said control being effected by programming the pattern.

18. Apparatus as claimed in Claim 16 wherein the mask is programmed so that, in use, blocking regions become transmitting and transmitting regions become blocking on a video frame sequential basis.

19. Apparatus as claimed in any previous claim in which the SLM is a liquid crystal display.

20. Apparatus as claimed in any previous claim in which means (28, 47) which is electrically switchable between an optically transparent and diffusing state is positioned intermediate the observer and the light source.

21. Apparatus as claimed in Claim 20 in which, in use, the SLM provides a two-dimensional image, having the full resolution of the SLM, when the switchable means is diffusing.

22. Apparatus as claimed in Claim 20 in which, in use, the image of an individual row of modulating elements of the SLM is broadened vertically when the switchable means is diffusing.

23. Apparatus as claimed in Claim 1 wherein the light structuring means comprises an array of convergent optical elements having a vertical pitch between elements of $P_L$ and said respective elements of the SLM have a vertical pitch between them of $P_T$ and the light structuring means further comprises, in use and in conjunction with the light source, a set of sub-sources of light, vertically spaced with a pitch substantially equal to $P_S$ , where

$$P_S = (P_T \times P_L) / (N \times P_T - P_L)$$

where N is an integer.

24. A method for the display of an autostereoscopic image having at least two perspective views of a scene which comprises providing a source of light (23, 34); positioning a spatial light modulator (SLM) (30, 41, 49, 67, 79) having a plurality of light modulating elements intermediate an observer and the source of light; and structuring the light from said source so that a first perspective view of the scene is seen by one eye (43) of the observer and a second perspective view of the scene is seen by the other eye (45) of the observer, characterised in that structuring the light includes forming, with convergent optical elements (29, 40, 48) intermediate the source of light and the SLM and in an interleaved manner for the views of the image, a set of vertically spaced concentrations of light (55) for each view which substantially map onto a respective set of elements of the SLM.

**Patentansprüche**

1. Vorrichtung zur Darstellung eines autostereoskopischen Bildes mit mindestens zwei perspektivischen Ansichten eines Schauplatzes, umfassend: eine Lichtquelle (23, 34); einen räumlichen Lichtmodulator (SLM) (30, 41, 49, 67, 79) mit einer Mehrzahl von lichtmodulierenden Elementen zwischen einem Beobachter und der Lichtquelle; sowie eine Einrichtung zum Strukturieren des Lichts, so dass eine erste perspektivische Ansicht des Schauplatzes von einem Auge (43) des Beobachters gesehen wird, und eine zweite perspektivische Ansicht des Schauplatzes vom anderen Auge (45) des Beobachters gesehen wird, dadurch gekennzeichnet, dass die Lichtstrukturiereinrichtung eine zwischen der Lichtquelle und dem SLM angeordnete und konvergente optische Elemente (29, 40, 48) aufweisende Lichtbündelungsanordnung einschließt, welche, in einer versetzten Weise für die Ansichten des Bildes, eine Gruppe von vertikal im Abstand angeordneten Lichtkonzentrationen (55) für jede Ansicht bildet, die im Wesentlichen auf eine jeweilige Gruppe von Elementen des SLM abgebildet wird.

2. Vorrichtung nach Anspruch 1, bei der die Lichtbündelungsanordnung weiter eine gemusterte Maske (35) mit lichtundurchlässigen (22, 25, 42) und lichtdurchlässigen (24, 44, 52, 56, 57) Bereichen sowie ein Array der konvergenten optischen Elemente umfasst, um in einer vertikalen Ebene das Licht von einem Punkt der Maske im Wesentlichen an der Ebene des SLM zu fokussieren.

3. Vorrichtung nach Anspruch 2, bei der die Maske (21, 35) mit horizontalen Reihen und im Wesentlichen vertikalen Spalten schachbrettartig gemustert ist, wobei jede Reihe und Spalte abwechselnde lichtundurchlässige und lichtdurchlässige Bereiche umfasst.

4. Vorrichtung nach Anspruch 3, bei der die Spalten verjüngt sind.

5. Vorrichtung nach einem der Ansprüche 2 bis 4, bei der die Lichtundurchlässigkeit und die Lichtdurchlässigkeit ausgewählte Teile des Spektralbereichs betrifft.

6. Vorrichtung nach einem der Ansprüche 3 bis 5, bei der die Lichtstrukturiereinrichtung ein weiteres Array von konvergenten optischen Elementen (27, 37) umfasst, wobei das weitere Array für eine Reihe der Maske mindestens einen Teil des Spektralbereichs einer Ansicht liefert und im Wesentlichen vertikale längliche Elemente mit einer Teilung aufweist, die dem Doppelten der Spaltenteilung der Maske entspricht.

7. Vorrichtung nach Anspruch 6, bei der die Spalten verjüngt sind und die Elemente des weiteren Arrays eine dazu passende Verjüngung aufweisen.

8. Vorrichtung nach Anspruch 2, bei der die Maske vertikale Spalten umfasst, und die Lichtstrukturiereinrichtung eine Abbildungseinrichtung zum Bereitstellen von horizontal nebeneinanderliegenden Betrachtungszonen umfasst, die jeweiligen Spalten der Maske entsprechen.

9. Vorrichtung nach Anspruch 8, bei der die Abbildungseinrichtung eine Linse (53) ist.

10. Vorrichtung nach Anspruch 1, bei der die Lichtbündelungsanordnung ein holografisches optisches Element (H2) umfasst.

11. Vorrichtung nach Anspruch 10, bei der die Lichtquelle vertikal im Abstand angeordnete kompakte Quellen (80, 81) umfasst, wobei jede kompakte Quelle das holografische optische Element mit unterschiedlichen Spektralkomponenten beleuchtet.

12. Vorrichtung nach einem beliebigen vorangehenden Anspruch, bei der eine Steuereinrichtung vorgesehen ist, um der Position des Beobachters zu folgen, indem die Richtung in einer horizontalen Ebene des Lichts aus der Lichtstrukturiereinrichtung ansprechend auf Beobachterkoordinatendaten gesteuert wird.

13. Vorrichtung nach Anspruch 6 oder Anspruch 7, bei der für ein Folgen der Position des Beobachters gesorgt wird, indem die Richtung in einer horizontalen Ebene des Lichts aus der Lichtstrukturiereinrichtung ansprechend auf Koordinatendaten des Beobachters gesteuert wird, wobei die Steuerung bewirkt wird, indem die gemusterte Maske in Bezug zu dem weiteren Array von konvergenten optischen Elementen bewegt wird.

14. Vorrichtung nach Anspruch 13, bei dem das Folgen der seitlichen Position des Beobachters eine Relativbewegung zwischen der gemusterten Maske und dem weiteren Array von konvergenten optischen Elementen in einer horizontalen Ebene (38) umfasst.

15. Vorrichtung nach Anspruch 13, bei dem das Folgen des Abstands des Beobachters von der Lichtstrukturiereinrichtung durch eine Relativbewegung zwischen der gemusterten Maske und dem weiteren Array von konvergenten optischen Elementen entlang einer Achse bewirkt wird, wobei die Achse im Wesentlichen mit der Längsrichtung der Elemente des weiteren Arrays (39) ausgerichtet ist, und wobei das Folgen der seitlichen Position des Beobachters durch eine Relativbewegung zwischen der gemusterten Maske und dem weiteren Array von konvergenten optischen Elementen, welche zu der Achse senkrecht ist, bewirkt wird.

16. Vorrichtung nach Anspruch 2, bei der das Muster der Maske programmierbar ist.

17. Vorrichtung nach Anspruch 16, bei der für das Folgen der Position des Beobachters gesorgt wird, indem die Richtung in einer horizontalen Ebene des Lichts aus der Lichtstrukturiereinrichtung ansprechend auf Koordinatendaten des Beobachters gesteuert wird, wobei die Steuerung durch Programmierung des Musters bewirkt wird.

18. Vorrichtung nach Anspruch 16, bei der die Maske so programmiert wird, dass im Gebrauch auf der Grundlage einer Videohalbbildfolge undurchlässige Bereiche durchlässig werden und durchlässige Bereiche undurchlässig werden.

19. Vorrichtung nach einem beliebigen vorangehenden Anspruch, bei welcher der SLM eine Flüssigkristallanzeigevorrichtung ist.

20. Vorrichtung nach einem beliebigen vorangehenden Anspruch, bei der eine Einrichtung (28, 47), die zwischen einem optisch durchsichtigen und einem optisch streuenden Zustand elektrisch schaltbar ist, zwischen dem Beobachter und der Lichtquelle angeordnet ist.

21. Vorrichtung nach Anspruch 20, bei der im Gebrauch, wenn die schaltbare Einrichtung streut, der SLM ein zweidimensionales Bild mit der vollen Auflösung des SLM liefert.

22. Vorrichtung nach Anspruch 20, bei der im Gebrauch, wenn die schaltbare Einrichtung streut, das Bild einer einzelnen Reihe von modulierenden Elementen des SLM vertikal verbreitert wird.

23. Vorrichtung nach Anspruch 1, bei der die Lichtstrukturiereinrichtung ein Array von konvergenten optischen Elementen umfasst, das zwischen Elementen eine vertikale Teilung $P_L$ aufweist, und die jeweiligen Elemente des SLM zwischen sich eine vertikale Teilung $P_T$ aufweisen, und die Lichtstrukturiereinrichtung, im Gebrauch und in Verbindung mit der Lichtquelle, weiter eine Gruppe von Unterlichtquellen aufweist, die mit einer im Wesentlichen gleich $P_S$ betragenden Teilung vertikal im Abstand angeordnet sind, wobei

$$P_S = (P_T \times P_L) / (N \times P_T - P_L),$$

wobei N eine Ganze Zahl ist.

24. Verfahren zur Darstellung eines autostereoskopischen Bildes mit mindestens zwei perspektivische Ansichten eines Schauplatzes, welches umfasst:

Bereitstellen einer Lichtquelle (23, 34,); Anordnen eines räumlichen Lichtmodulators (SLM) (30, 41, 49, 67, 79) mit einer Mehrzahl von lichtmodulierenden Elementen zwischen einem Beobachter und die Lichtquelle; und Strukturieren des Lichts aus der Quelle, so dass eine erste perspektivische Ansicht des Schauplatzes von einem Auge (43) des Beobachters gesehen wird, und eine zweite perspektivische Ansicht des Schauplatzes vom anderen Auge (45) des Beobachters gesehen wird, dadurch gekennzeichnet, dass das Strukturieren des Lichts die Bildung, mit konvergenten optischen Elementen (29, 40, 48) zwischen der Lichtquelle und dem SLM und in einer versetzten Weise für die Ansichten des Bildes, einer Gruppe von vertikal im Abstand angeordneten Lichtkonzentrationen (55) für jede Ansicht einschließt, die im Wesentlichen auf eine jeweilige Gruppe von Elementen des SLM abgebildet wird.

**Revendications**

1. Appareil pour l'affichage d'une image auto-stéréoscopique comportant au moins deux vues en perspective d'une scène, comprenant une source de lumière (23, 34) ; un modulateur de lumière spatial (SLM) (30, 41, 49, 67, 79) comportant une pluralité d'éléments modulateurs de lumière intermédiaires entre un observateur et la source de lumière ; et des moyens pour structurer la lumière de façon qu'une première vue en perspective de la scène soit observée par un oeil (43) de l'observateur et qu'une deuxième vue en perspective de la scène soit observée par l'autre oeil (45) de l'observateur, caractérisé en ce que lesdits moyens de structuration de lumière comportent un agencement de concentration de lumière, disposé entre la source de lumière et le SLM et comportant des éléments optiques convergents (29, 40, 48), qui forment, d'une manière entrelacée pour les vues de l'image, un ensemble de concentrations de lumière (55) verticalement séparées pour chaque vue, sensiblement mappé sur un ensemble respectif d'éléments du SLM.

2. Appareil selon la revendication 1, dans lequel l'agencement de concentration de lumière comprend en outre un masque à motifs (35) avec des régions de blocage (22, 25, 42) et de transmission (24, 44, 52, 56, 57) de lumière et une matrice des éléments optiques convergents destinée à la mise au point dans un plan vertical de la lumière provenant d'un point du masque sensiblement au niveau du plan du SLM.

3. Appareil selon la revendication 2, dans lequel le masque (21, 35) est quadrillé, comportant des rangées sensiblement horizontales et des colonnes sensiblement verticales, chaque rangée et colonne comprenant des régions alternées de blocage et de transmission de lumière.

4. Appareil selon la revendication 3, dans lequel les colonnes sont effilées.

5. Appareil selon l'une quelconque des revendications 2 à 4, dans lequel le blocage et la transmission de lumière s'effectuent par rapport à des portions sélectionnées de la plage spectrale.

6. Appareil selon l'une quelconque des revendications 3 à 5, dans lequel lesdits moyens de structuration de lumière comprennent une autre matrice d'éléments optiques convergents (27, 37), ladite autre matrice fournissant, pour une rangée du masque, au moins une partie de la plage spectrale d'une vue et comportant des éléments allongés sensiblement verticaux avec un espacement correspondant au double de l'espacement des colonnes du masque.

7. Appareil selon la revendication 6, dans lequel les colonnes sont effilées et les éléments de l'autre matrice présentent un effilement correspondant.

8. Appareil selon la revendication 2, dans lequel le masque comprend des colonnes verticales et les moyens de structuration de lumière comprennent des moyens de formation d'image destinés à fournir des zones d'observation juxtaposées horizontalement correspondant aux colonnes respectives du masque.

9. Appareil selon la revendication 8, dans lequel les moyens de formation d'image sont constitués d'une lentille (53).

10. Appareil selon la revendication 1, dans lequel l'agencement de concentration de lumière comprend un élément optique holographique (H2).

11. Appareil selon la revendication 10, dans lequel la source de lumière comprend des sources compactes espacées verticalement (80, 81), chaque dite source compacte illuminant l'élément optique holographique avec des composantes spectrales différentes.

12. Appareil selon l'une quelconque des revendications précédentes, dans lequel des moyens de commande sont prévus pour suivre l'emplacement de l'observateur en commandant la direction d'un plan horizontal de la lumière par rapport aux moyens de structuration de lumière en réponse à des données de coordonnées de l'observateur.

13. Appareil selon la revendication 6 ou la revendication 7, dans lequel le suivi de l'emplacement de l'observateur est assuré en commandant la direction dans un plan horizontal de la lumière par rapport aux moyens de structuration de lumière en réponse auxdites données de coordonnées de l'observateur, ladite commande étant effectuée en déplaçant le masque à motifs par rapport à l'autre matrice d'éléments optiques convergents.

14. Appareil selon la revendication 13, dans lequel le suivi de la position latérale de l'observateur comprend un mouvement relatif dans un plan horizontal (38) entre le masque à motifs et l'autre matrice d'éléments optiques convergents.

15. Appareil selon la revendication 13, dans lequel le suivi de la distance de l'observateur par rapport aux moyens de structuration de lumière est effectué par un mouvement relatif entre le masque à motifs et l'autre matrice d'éléments optiques convergents le long d'un axe, ledit axe étant sensiblement aligné avec la direction allongée des éléments de ladite autre matrice (39) et le suivi de la position latérale de l'observateur est effectué par un mouvement relatif entre le masque à motifs et l'autre matrice d'éléments optiques convergents qui est orthogonale audit axe.

16. Appareil selon la revendication 2, dans lequel le motif du masque est programmable.

17. Appareil selon la revendication 16, dans lequel le suivi de l'emplacement de l'observateur est assuré en commandant la direction dans un plan horizontal de la lumière par rapport aux moyens de structuration de lumière en réponse auxdites données de coordonnées de l'observateur, ladite commande étant effectuée en programmant le motif.

18. Appareil selon la revendication 16, dans laquel le masque est programmé de façon que, pendant l'utilisation, des régions bloquantes deviennent émettrices et des régions émettrices deviennent bloquantes sur une base séquentielle de trame vidéo.

19. Appareil selon l'une quelconque des revendications précédentes, dans lequel le SLM est un dispositif d'affichage à cristaux liquides.

20. Appareil selon l'une quelconque des revendications précédentes, dans lequel des moyens (28, 47) qui peuvent être commutés électriquement entre un état optiquement transparent et un état de diffusion, sont positionnés entre l'observateur et la source de lumière.

21. Appareil selon la revendication 20, dans lequel, pendant l'utilisation, le SLM fournit une image bidimensionnelle, ayant la résolution complète du SLM, lorsque les moyens commutables diffusent.

22. Appareil selon la revendication 20, dans lequel, pendant l'utilisation, l'image d'une rangée individuelle d'éléments de modulation du SLM est élargie verticalement lorsque les moyens commutables diffusent.

23. Appareil selon la revendication 1, dans lequel les moyens de structuration de lumière comprennent une matrice d'éléments optiques convergents ayant un espacement vertical entre éléments de $P_L$ et lesdits éléments respectifs du SLM ont un espacement vertical entre eux de $P_T$ et les moyens de structuration de lumière comprennent en outre, pendant l'utilisation et conjointement avec la source de lumière, un ensemble de sources secondaires de lumière, espacées verticalement avec un espacement sensiblement égal à $P_S$, où

$$P_S = (P_T \times P_L)/(N \times P_T - P_L)$$

N étant un entier.

24. Procédé pour l'affichage d'une image auto-stéréoscopique comportant au moins deux vues en perspective d'une scène, comprenant la fourniture d'une source de lumière (23, 34) ; le positionnement d'un modulateur de lumière spatial (SLM) (30, 41, 49, 67, 79) comportant une pluralité d'éléments modulateurs de lumière intermédiaires entre un observateur et la source de lumière ; et la structuration de la lumière provenant de ladite source de façon qu'une première vue en perspective de la scène soit observée par un oeil (43) de l'observateur et qu'une deuxième vue en perspective de la scène soit observée par l'autre oeil (45) de l'observateur, caractérisé en ce que la structuration de lumière comporte la formation, avec des éléments optiques convergents (29, 40, 48), intermédiaires entre la source de lumière et le SLM et d'une manière entrelacée pour les vues de l'image, d'un ensemble de concentrations de lumière (55) verticalement séparées pour chaque vue, sensiblement mappé sur un ensemble respectif d'éléments du SLM.

Fig. — 1 —

Fig. - 2 -

EP 0 865 626 B1

Fig. - 3 -

EP 0 865 626 B1

Fig. – 4 –

Fig. - 5 -

EP 0 865 626 B1

# Fig. - 6 -

EP 0 865 626 B1

Fig. - 7 -

EP 0 865 626 B1

Fig. - 8 -